# EUROPEAN PATENT SPECIFICATION

(11) **EP 1 427 176 B1**
(45) Date of publication and mention of the grant of the patent: **21.05.2014**
(21) Application number: 03078692.5
(22) Date of filing: 17.11.2003
(51) Int. Cl.: H04N 1/00, H04N 1/12

(54) **A method and apparatus for calibrating a transport scanner and a test original for use with such method and apparatus**
Verfahren und Vorrichtung zur Kalibration eines Transportscanners und Testvorlage zur Verwendung mit einem solchen Verfahren und einer solchen Abtastvorrichtung
Procédé et appareil pour la calibration d'un scanner à transport et mire optique pour l'utilisation dans un tel procédé et appareil

(30) Priority: 28.11.2002 EP 02080015
(43) Date of publication of application: 09.06.2004
(73) Proprietor: Océ-Technologies B.V., 5914 CC Venlo (NL)
(72) Inventor: Van Der Heijden, Gerardus J.E.L., 5912 TM Venlo (NL)
(74) Representative: van de Sande, Jacobus

(56) References cited:
- JP-A- 2001 333 250
- US-A- 5 245 440
- US-A- 5 510 896
- US-A- 6 005 587
- US-A- 6 016 207
- US-B1- 6 222 934
- US-B1- 6 307 579
- MEEDER R J J ET AL: "TEST FOR EVALUATING LASER FILM DIGITIZERS" MEDICAL PHYSICS, AMERICAN INSTITUTE OF PHYSICS. NEW YORK, US, vol. 22, no. 5, 1 May 1995 (1995-05-01), pages 635-642, XP000518762 ISSN: 0094-2405

## Description

### BACKGROUND OF THE INVENTION

The invention relates to a method for calibrating a transport scanner apparatus, having a transport speed and arranged for scanning a two-dimensional original and forming an electronic image of the two-dimensional image for subsequent usage in an appropriate information handling system, said scanning and forming being executed under control of device parameters,
said method comprising the steps of scanning a test original, featuring a leading edge and provided with a test image, and forming an electronic bit map image of the test image, the test image comprising at least one marking at a predetermined position with two sides of the at least one marking in known parallel displacment and parallel with the leading edge, the method further comprising the step of automatically calibrating the apparatus based on the at least one marking in the electronic bit map image formed of the test image by calculating at least one correction value for the corresponding at least one device parameter. The invention also relates to an apparatus having a transport scanner facility and a test original for use with the method. Transport or feed through scanners are being used for deriving a complete and conforming image from an original, either for the purpose of immediate copying thereof, or for intermediate storage with an intention to later usage of the information for manipulation and/or eventual delayed copying or printing. In particular, but not by way of limitation, the original may have an appreciable size such as an A0 or A1 format, and may even stretch out in one direction, such as in the form of a semi-infinite roll. On the other hand, the original may also have quite a smaller size. The content of the image is inconsequential, but various applications may range from cartography to mechanical engineering. Such transport scanner distinguishes from a so-called flat-bed scanner in that in the former the original moves along a fixed optical arrangement of the apparatus that usually is realized as an array of CCD elements which runs generally transverse to the direction of motion of the original.

Now, various geometrical uncertainties will exist In the apparatus as recited, where against both the size and the timing of the array of CCD elements would need calibration. Furthermore, also the transport mechanism and the precise location of the original in a transverse direction to the transport vector would justify effort for precise calibration. All these calibrations are relative to the standard size original that would effectively be used. The problem is aggravated in that the transport mechanism and the geometrical scaling of the image by the optical arrangement are governed by quite different control mechanisms. Particular problems are caused by uncertainties in the leading edge position and trailing edge position of the original and in the transport speed vis-à-vis the optical arrangement.

Current practice with such transport scanners has been to provide such standard size original, to make a copy thereof, and to have any necessary calibrations applied to the scanner facility by a skilled technician. The ongoing advance of tachnology and its rising degree of sophistication, and furthermore the increasing usage of such transport scanners have made the necessity for such manual calibration an appreciable burden, both in terms of cost and in terms of delays incurred, in particular when the scanner may be subject to temporal drifting,

Moreover, according to prior practice, generally an already adjusted printer must be present in the overall system, which may necessitate taking recourse to a remote facility. A further problem will be met when the scanner is riot locally connected to an actual printer or copler facility, which may then be present Instead In a remote location, or be only available after an appreciable delay.

JP 07 162604A to Fuji Xerox discloses a method according to the preamble. Disadvantage of the method presented there is that an electronic image stored in memory will be malformed since, only after scanning and storlgn, correction factors, obtained from calibration will be applied to convert the electronic image stored to a corrected image. So, each time an image is scanned all correction factors have to be applied.

### SUMMARY OF THE INVENTION

In consequence, amongst other things, it is an object of the present invention to allow such calibrating method to be used In a semi-automatic, secure, and fast manner and without the need for actually making a physical copy of the original, and in particular to prevent that all correction factors have to be applied each time after scanning an original

Now therefore, according to one of its aspects the invention Is characterized according to the characterizing part of Claim 1. The carrier of the test original may be made of a material that has a very conforming and constant size, and the image applied thereon may be shaped in such way as to allow maximum accuracy. In this way, the invention will provide for an appropriate correction value for the transport speed. Correcting the transport speed will result in normal mode in a 1:1 conforming electronic image stored in memory, that needs no additional correction for this device parameter each time after scanning. By itself, United States Patent US-A-5,245,440 to Sato presents a calibration carrier provided with a calibration image, but, the shape of the image includes various slanted edges and the calibration procedures followed provide pulses relating to single pixels (cf. X1, X2 in Figure 6B of Sato) and will not provide the combination of automatic execution and high accuracy attained by the calibration method of the present invention. In fact, an advantageous aspect of the present invention's calibrating is based on effecting the measurement on a plurality of pixels, so that possible degradations or variations of a few thereof would cancel or average out In the flnal result.

The invention also relates to an apparatus being arranged for implementing the method as claimed in Claim 1. Still further advantageous aspects of the invention are recited in dependent Claims.

In particular, an extended version of the calibration according to the present invention will additionally approach the scanline width deviation or horizontal zoom correction, and also, or as an alternative, the left margin alignment or the alignment of the detector array with the right alignment stop position. Note that in general, the notions "left" and "right" may be mutually exchanged.

### BRIEF DESCRIPTION OF THE DRAWINGS

These and further aspects and advantages of the invention will be discussed more in detail hereinafter with reference to the disclosure of preferred embodiments, and in particular with reference to the appended Figures that show:
Figure 1, an exemplary sketch of the functional paper path applied in a scanner facility;
Figure 2, a stylistic drawing of a test original embodiment;
Figure 3, an image in memory resulting from scanning the test original;
Figure 4, a simplified component diagram of a reproduction device, comprising an embodiment of the invention;
Figure 5, a flow chart showing an embodiment of the method according to the invention.

### DETAILED DESCRIPTION OF PREFERRED EMBODIMENTS

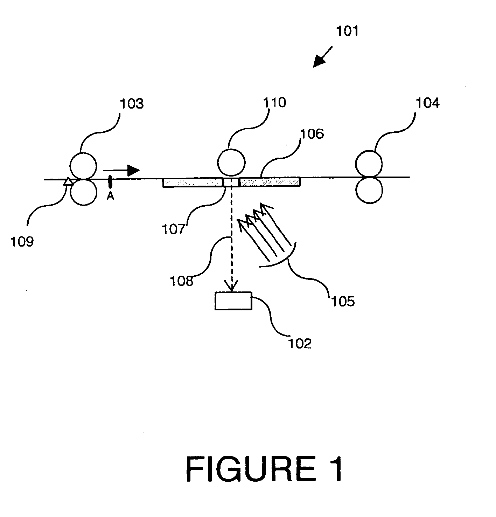

Figure 1 presents a schematic cross-sectional view of a scanning device. The scanning device shown is particularly adapted to scan large format documents such as blueprints and the like. The device 101 comprises a linear CCD array 102, two pairs of transport rollers 103 and 104 for transporting an original sheet in the indicated transport direction, a light source 105, a platen 106 for guiding the original sheet, a slit 107 in the platen for forming an oblong exposure area perpendicular to the transport direction, and an optical path 108 for projecting an image at the exposure area onto the CCD array. Furthermore is indicated a sheet sensor 109 and a gauge roll 110. Sheet sensor 109 is in the ON state when a sheet is present at the detector and is in the OFF state when no sheet is present at the detector.
In operation, when a sheet is positioned against the nip of roller pair 103 by an operator, the sheet sensor switches to the ON state, whereupon the roller pair, after a short delay, makes a part of a turn in such a way that the sheet is pulled in over a short distance. This will effectively free the hands of the operator. The leading edge of the original sheet is then at position A, which is at a distance of Lstart from the centre of the exposure area. After activation of the start button, the original sheet is transported along the platen and across the exposure area with a predetermined velocity. Naturally, after starting the transport, movement acceleration will take place, but this initial phase is understood to have been terminated when the leading edge of the original passes the exposure area. The light source illuminates the original sheet at the exposure area. An image line of the original document at the image plane is projected via the optical path on the CCD array. Electrical signals generated in the elements of the CCD array in correspondence with the line image at the exposure area are read out in parallel and placed in a line buffer, which line buffer is serially read out for transport to an electrical circuit for further processing. After appropriate processing the resulting pixels are stored in memory as an electronic image in the format of a bitmap. The gauge roll allows, in cases where the light source is turned on and no original sheet is present at the exposure area, to measure and compensate for CCD sensitivity, such as against non-uniformity thereof.
Figure 1 does not show various optical aspects of the embodiment, such as the exact shape of lenses and mirrors, but such may be dimensioned according to the general state of the art. In normal mode, reading out of the CCD-array signals starts at the moment the leading edge of the original sheet passes the exposure area. In calibration mode, reading out of the CCD-array signals starts at the moment the original sheet (test original) starts transporting from its initial position A.

The scanning device is governed by a number of scanner or device parameters that control the process of making a mapping from the image on paper to a bitmap image in memory. These parameters are mainly determined by the design of the scanning device. However, due to inaccuracies, e.g. at production when assembling the device, or due to environmental circumstances, parameters may deviate from intended values.
Consequently, the bitmap of a scanned image will not be an exact copy of the original image. The method according to the invention analyses the bitmap image, resulting from the test original, derives differences from the intended values, and calculates correction values for the respective parameters. Upon correction of these parameters, the conversion process from image on a page to image in memory will result in a true mapping, despite differences in particular instances of scanning devices.

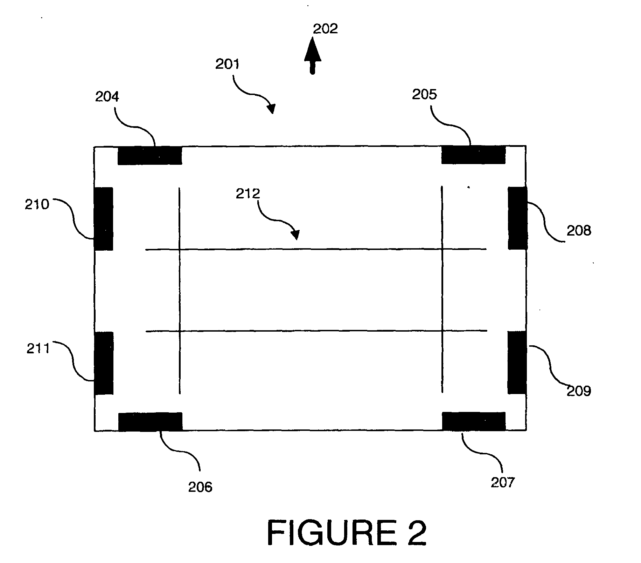

Figure 2 presents a stylistic drawing of a test original embodiment. The test original 201 is of generally rectangular disposition, and is made of a material that has a very conforming and constant size, such as polyester. In the present embodiment, it is fed into the scanner facility along the direction of bold arrow 202. The test original has four edges. Adjacent edges are accurately perpendicular and opposing edges are accurately parallel to each other. Furthermore, each of the four edges of the test original has two rectangular darkly coloured shapes or markings (204, 205, 206, 207, 208, 209, 210 and 211), that ideally are black and have identical sizes. However, other colours and shapes may in principle be open to skilled art practitioners, provided that certain accurately detectable sides are present for calibration. These dark rectangulars run flush with the associated edge of the test original. In fact, their outer side is formed by the process of cutting off the test original, so that their tolerance is only the cutting-off tolerance. Blocks 204 and 205 are at the leading edge of the test original. Blocks 206 and 207 are at the trailing edge of the test original.

Furthermore, a line pattern 212 has been applied as shown to the test original that forms a further rectangle disposed between the edges of the various dark shapes. These lines, and in particular, their various crossing points, can be used as specific measurement points for the horizontal and vertical zoom factors of the CCD timing and control, as will be disclosed hereinafter more in detail.

As step in the calibration procedure the test original is scanned in and stored as a bitmap in memory.

Now, the sensing pixels will present synchronous clocked signals that will be digitized by an arrangement not shown. On meeting the side of shape 204, the sensing pixels will more or less stepwise see their signals change from ''white'' to "black". For calculating the position of the edge, binarization may be effected before or after processing. In addition, interpolation of the blackness values between successive clock cycles may be effected before digital processing. In an initial stage, non-conforming pixel values may be dropped from further consideration. All of the above will present a black/white edge with a granularity of at most one vertical pixel period. The processing may take the corresponding signals from paired dark region 205 into account in an appropriate stage of the calibration calculation.

What with dark shape 210, here the outer edge will be detected by only a few pixels at a time, but various successive clock cycles will all feature the same position detection. In consequence, with respect to dark shape 204, the corroboration along an outer edge detected is lateral and spatial, whereas interpolation across the same edge is vertical and temporal. In contradistinction, for dark shape 210 the corroboration along the outer edge is vertical and temporal, whereas the interpolation across the same edge is horizontal and spatial. In general, only the outer edges of the eight dark shapes need to be used for calibration. However, in certain situations also the inner edges of the shapes could be used. Likewise, the shape of the line pattern 212, and in particular, the locations of the cross points therein, can be used for therefrom deriving all calibration data.

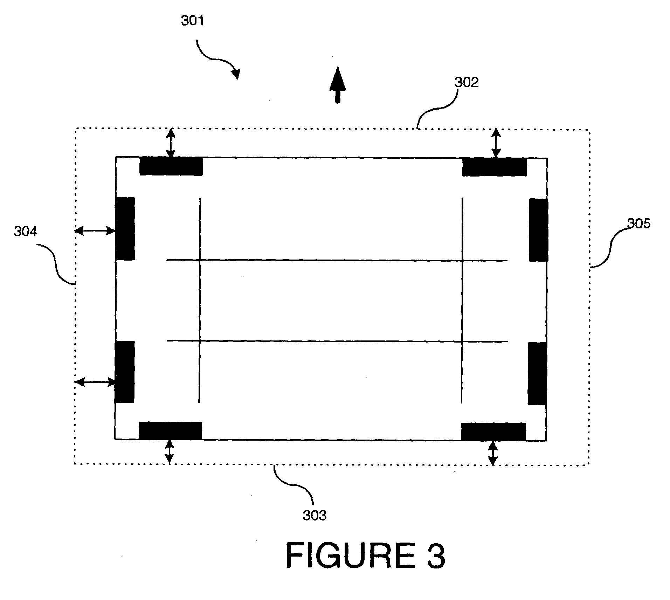

Fig. 3 gives a representation of the resulting bitmap in memory. The dashed lines present the borderlines of the total scan area. The total scan area is, when a calibration scan according to the invention is carried out, bigger than the total scan area used for normal scans. Line 302 is the first scan line received from the CCD; line 303 corresponds with the last scan line received from the CCD; borderlines 304 and 305 correspond with the signals from the first and last operative CCD-element of the array.

Carrying out a calibration scan is started when the operator presses the start button. This leads at the same time, to activation of the feed rollers, that start feeding the original, and reading out of the CCD-array, although at this initial moment the leading edge of the test original is still at position A. The last line 303 of the scan area is read out after lapse of a predetermined time interval, after deactivation of the sheet sensor 109, in such a way that also the trailing edge of the test original has passed along the CCD-array.

The invention will now be illustrated by application of the method according to the invention in a reproduction apparatus. It is evident, however, that application of the method according to the invention in a stand alone scanner is possible as well, or in a scanner in combination with any kind of processing device, where the scanner for calibration purposes is temporarily coupled to the processing device.

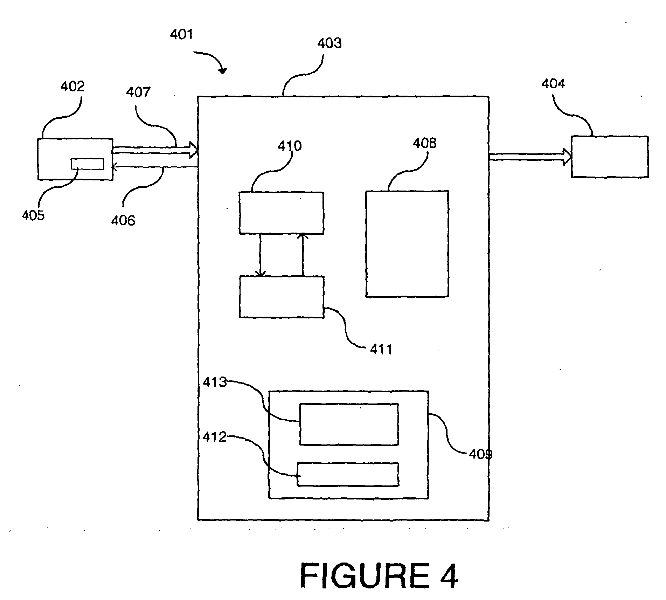

Figure 4 provides an architectural overview of a reproduction apparatus adapted to carry out the method according to the invention. The reproduction apparatus 401 comprises a scanner unit 402, a controller module 403, and a printer unit 404. The scanner unit 401 comprises a memory 405 for storage of scan parameters. The scanner unit is via a bi-directional control line 406 and a data line 407 connected to the controller unit. Scanned image data are delivered line by line to the controller via the data line. The controller module comprises a memory unit 408 and a user interface unit 409. Above that, the controller module is adapted to execute a number of software programs to perform its tasks. Indicated are a calibration program 410 and a analysis program 411 .The memory unit 408 comprises a first memory area for storing a scanned image as a bitmap delivered line by line via data line 407 and a second memory area for storing a logfile of the calibration procedure. User interface unit 409 comprises a key panel or keyboard 412, comprising a start button, and a display 413.

The calibration procedure is as follows. The calibration is initiated e.g. from key panel 412. Such initiation may be effected upon a request by an operator, which need not be a specially skilled and trained calibrator technician. The calibration program 410 will be invoked, and a command is passed on to the scanner through command line 406. This procedure will bring the scanner in calibration mode and the scanner will be prepared for scanning the test original shown in Figure 2. An appropriate message may be given on display 413 of the user interface unit to induce the operator to apply the test original and press the start button. After the operator has inserted the test original and has pushed the start button, the test original is scanned and the scan bitmap data are passed on to the controller through data channel 407 and are stored in the first memory area.

When the complete bit map has been received successfully the calibration program invokes the analysis program 411 according to the invention and starts analyzing the bitmap. When the program has calculated the relevant parameters, the analysis status succeeded and associated parameters are returned. The parameters are passed to the scanner 402 as a calibration parameter set through interface 406, where they are stored in memory 405. The latter step will allow for denial by the scanner, for example, if one or more of the parameter values would fall outside an allowed interval therefor. Absent such denial, the overall procedure will conclude successfully. The scanner parameters are updated in a data base sds_log.mdb in a second part of memory 408. The program will report the test status as completed, and the apparatus will return to a normal user mode.

The outcome of the analysis program is composed of the following parameter values that result from the various analysis calculations:
leading_edge_val + , the calculated correction value for the leading edge position;
trailing_edge_val + , the calculated correction value for the trailing edge position;
ver_zoom_corr_val + , the calculated correction value for the vertical zoom, or motor speed versus image length;
hor_zoom_corr_val + , the calculated correction value for the horizontal zoom or image width;
left_align_val, the calculated correction value for the left margin position.

In the above, the left_edge_align value may be omitted, inasmuch as a tolerance therein would only cause a lateral shift of the image without further distortions.

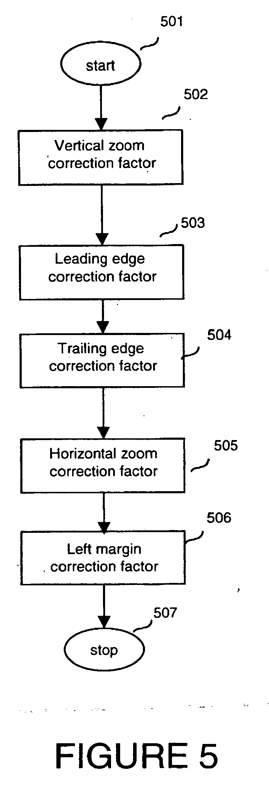

Figure 5 illustrates a flow chart of the analysis program. After invocation of procedure in step 501, in step 502, the distance expressed in pixels between the leading edge and the trailing edge as defined by the outer sides of the rectangular shapes 204, 206 and 205, 207 (Figure 2) is determined from the bitmap. This distance is then calculated to a distance i+n millimetres on paper when printed. The distance in millimetres is compared with the predetermined actual distance in millimetres on the test original. A correction value expressed as a percentage is then returned to the scanner. In accordance with this correction value, the transport speed of the scanner is corrected. Next, in step 503 the distance between the very first line in the bit map and the first side of the first black areas is determined. Given the transport speed in the calibration mode, the timing of the start of transport by the first nip and the timing of reading out the first line from the CCD, the actual distance between the start position of the leading edge (Fig.1, A) and the exposure slit is calculated. From the determined distance and the transport speed in normal mode the timing of control signal *start CCD readout* is calculated, such that in normal mode the reading out of the CCD will start at precisely the moment when the leading edge of the original sheet passes the exposure slit.

In step 504 of the procedure, the timing of the trailing edge is derived from the bitmap and compared with the deactivation of the original detector (cf. Figure 1). From the time difference, and through knowing the transport speed, the actual distance in millimetres between the original detector and the exposure slit is calculated. For any other transport speed, the timing for stopping the reading out of the CCD can now be calculated.

In step 505, the distance expressed in pixels between the two vertical lines of rectangle 212 is determined. This distance, expressed in pixels, is converted to a distance in millimetres on paper when printed. This calculated distance is compared with the predetermined actual distance in millimetres on the original test chart. A correction value, as a percentage of paper width, is returned to the scanner. In accordance with this correction value, a scaling algorithm in the scanning direction can be applied. Next, in step 506 the distance in the bitmap between the first pixel in a line and the vertical black areas at the left is measured. This will give the actual distance in pixels between the physical left margin guiding means and the first pixel along the CCD array. A correction value expressed in pixels is returned to the scanner. In a normal scanning run, a number of leading pixels in a line will be discarded, in accordance with the correction value so determined. Finally, in step 507 the procedure exits.

By way of further deviation from the above, calibration may be terminated earlier for various reasons. A first one will be caused by the operator pushing the STOP button sometime during the calibration procedure. This will be effected by an ABORT from the scanner followed by a STOP request from the controller. Further terminations may arise as being caused by Setmemory full event (from controller to scanner), Disk full event (from controller to scanner), a STOP TEST as initiated by a operator, either before scanning has effectively started, during the scanning proper, during the analysis annex computation of the parameters, or while setting the parameters after calculation. Another reason could be a failed analysis, so that no parameter values will be found. Finally, the eventual parameters may be denied or refused by the scanner.

The above disclosure presents a preferred embodiment of the present invention to which persons skilled in the art will recognize many amendments and variations; and in consequence the scope of the present invention should be considered to be limited only by the appended Claims.

## Claims

1. A method for calibrating a transport scanner apparatus, having a transport speed and being arranged for scanning a two-dimensional original and for forming an electronic image of the two-dimensional original for subsequent usage in an information handling system, said scanning and forming being executed under control of device parameters, that control the process of making a mapping from an image on paper to a bitmap image in memory, said method comprising the steps of:
scanning a rectangular test original, provided with a test image, by moving the test original along an optical arrangement fixedly mounted to the transport scanner apparatus, the test image comprising eight markings of rectangular dark shape which are disposed pairwise at a distance at each of the four sides of the rectangular test original, the markings having one side flush with an edge of the rectangular test original;
forming an electronic bitmap image of the test image;
analysing the electronic bitmap to obtain outer edge positions of the markings; and
deriving from the analysed outer edge positions of the markings calibrated device parameters for controlling further scanning of originals by the transport scanner apparatus, wherein in the step of scanning a rectangular test original, a total scan area is larger than for regular originals of the same size.

2. A method as claimed in Claim 1, wherein the transport speed of the transport scanner apparatus is adjusted to apply a zoom factor in transport direction, **characterized in that** the test original, featuring a leading edge, comprises two sides of at least one marking in known parallel displacement and parallel with the leading edge, and the method comprises the step of assessing a correction value for the zoom factor based on the actual parallel displacement in the electronic image of the two sides.

3. A method as claimed in Claim 1, wherein the transport scanner apparatus features a CCD for scanning the two-dimensional original and features a leading edge timing signal for starting reading out the CCD, **characterized in that**
the test original comprises a marking with one side flush with the leading edge; and **in that** the method further comprises the step of:
assessing a correction value for the leading edge timing signal based on the position of the one side in the electronic bitmap image in relationship with the actually used leading edge timing signal.

4. A method as claimed in Claim 1, wherein the transport scanning apparatus features a CCD for scanning the two-dimensional original and features a trailing edge timing signal for stopping reading out the CCD, **characterized in that**
the test original comprises a marking with one side flush with the trailing edge; and **in that** the method further comprises the step of:
assessing a correction value for the trailing edge timing signal based on the position of the one side in the electronic bitmap image in relationship with the actually used leading edge timing signal.

5. A method according to any of the preceding claims, wherein the transport scanner apparatus features a zoom factor perpendicular to the transport direction,
chararcterized in that
the test original comprises two sides of at least one marking parallel to the transport direction
and in that the method further comprises the step of
assessing a correction value for the zoom factor perpendicular to the transport direction based on a ratio of the distance between the two sides in the electronic bitmap image and the actual distance on the test original.

6. A method according to any of the preceding claims, wherein the transport scanning apparatus features a left or right margin position stop for aligning a detector array position, **characterized in that**
the test original comprises a marking with one side flush with the left or right edge parallel to the transport movement; and **in that** the method comprises the steps of for each line starting recording at a first available pixel element of the CCD or stopping recording at a last available pixel element; and
assessing a correction value for the left or right margin signal based on the difference between the first or last available pixel element and the one side of the marking with the one side flush with the left or the right edge respectively.

7. An apparatus having a transport scanner facility for scanning a two- dimensional original by moving the original along an optical arrangement fixedly mounted to the transport scanner facility with a transport speed and for forming an electronic image of it for subsequent usage in an information handling system, the transport scanner facility featuring a left or right margin stop, said apparatus comprising calibration means for calibrating device parameters that control the process of making a mapping from an image on paper to a bitmap image in memory using a rectangluar test original, comprising eight markings of rectangular dark shape which are disposed pairwise at a distance at each of the four sides of the rectangular test original, the markings having one side flush with an edge of the rectangular test original, wherein said calibration means comprise processing means for processing the electronic bitmap image obtained by scanning the rectangular test original in order to derive from the markings in the electronic bitmap image calibrated device parameters,
**characterised in that** the calibration means are configured to apply a larger total scan area than for scanning a regular original, and the calibrated device parameters are derived from outer edge positions of the markings in the electronic bitmap.

## Patentansprüche

1. Verfahren zum Kalibrieren eines Transportscanners, der eine Transportgeschwindigkeit hat und dazu ausgebildet ist, ein zweidimensionales Original abzutasten und ein elektronisches Bild des zweidimensionalen Originals zum anschließenden Gebrauch in einem Informationsverarbeitungssystem herzustellen, wobei das Abtasten und das Herstellen unter der Steuerung von Geräteparametern ausgeführt werden, die den Prozess der Herstellung einer Abbildung von einem Bild auf Papier auf ein Bitmap-Bild im Speicher steuern, welches Verfahren die folgenden Schritte umfasst:
Abtasten eines rechteckigen Testoriginals, das mit einem Testbild versehen ist, durch Bewegen des Testoriginals entlang einer optischen Anordnung, die fest an dem Transportscanner montiert ist, wobei das Testbild acht Markierungen in rechteckiger dunkler Form aufweist, die paarweise in Abstand zueinander an jeder der vier Seiten des rechtwinkligen Testoriginals angeordnet sind, wobei die Markierungen eine Seite haben, die mit einer Kante des rechteckigen Testoriginals bündig ist Herstellen eines elektronischen Bitmap-Bildes des Testbildes
Analysieren der elektronischen Bitmap, um äußere Randpositionen der Markierungen zu erhalten, und
Herleiten von kalibrierten Geräteparametern zur Steuerung der weiteren Abtastung von Originalen durch den Transportscanner anhand der analysierten äußeren Randpositionen der Markierungen, wobei in dem Schritt der Abtastung eines rechteckigen Testoriginals das gesamte Abtastgebiet größer ist als für reguläre Originale derselben Größe.

2. Verfahren nach Anspruch 1, bei dem die Transportgeschwindigkeit des Transportscanners angepasst wird, um einen Zoomfaktor in Transportrichtung anzuwenden, **dadurch gekennzeichnet, dass** das Testoriginal, das eine vorauslaufende Kante aufweist, zwei Seiten von wenigstens einer Markierung in bekannter Parallelverschiebung und parallel zu der vorauslaufenden Kante aufweist und das Verfahren den Schritt der Bewertung eines Korrekturwertes für den Zoomfaktor auf der Grundlage der aktuellen Parallelverschiebung in dem elektronischen Bild der zwei Seiten umfasst.

3. Verfahren nach Anspruch 1, bei dem der Transportscanner ein CCD zum Abtasten des zweidimensionalen Originals und ein Zeitsignal für die vorauslaufende Kante aufweist, zum Starten des Auslesens des CCD, **dadurch gekennzeichnet, dass** das Testoriginal eine Markierung mit einer mit der vorauslafenden Kante bündigen Seite aufweist, und dass das Verfahren weiterhin den folgenden Schritt umfasst:
Bewerten eines Korrekturwertes für das Zeitsignal für die vorauslaufende Kante auf der Grundlage der Position der einen Seite in dem elektronischen Bitmap-Bild in Beziehung zu dem tatsächlich verwendeten Zeitsignal für die vorauslaufende Kante.

4. Verfahren nach Anspruch 1, bei dem der Transportscanner ein CCD zum Abtasten des zweidimensionalen Originals und ein Zeitsignal für eine nachlaufende Kante aufweist, zum Beenden des Auslesens des CCD, **dadurch gekennzeichnet, dass** das Testoriginal eine Markierung mit einer mit der nachlaufenden Kante bündigen Seite aufweist, und dass das Verfahren weiterhin den folgenden Schritt umfasst:
Bewerten eines Korrekturwertes für das Zeitsignal für die nachlaufende Kante auf der Grundlage der Position der einen Seite in dem elektronischen Bitmap-Bild in Beziehung zu dem tatsächlich verwendeten Zeitsignal für die vorauslaufende Kante.

5. Verfahren nach einem der vorstehenden Ansprüche, bei dem der Transportscanner einen Zoomfaktor rechtwinklig zu der Transportrichtung aufweist, **dadurch gekennzeichnet, dass**
das Testoriginal zwei Seiten wenigstens einer Markierung parallel zu der Transportrichtung aufweist
und dass das Verfahren weiterhin den folgenden Schritt umfasst:
Bewerten eines Korrekturwertes für den Zoomfaktor rechtwinklig zu der Transportrichtung auf der Grundlage eines Verhältnisses zwischen dem Abstand zwischen den beiden Seiten in dem elektronischen Bitmap-Bild und dem tatsächlichen Abstand auf dem Testoriginal.

6. Verfahren nach einem der vorstehenden Ansprüche, bei dem der Transportscanner einen linken oder rechten Randanschlag zum Ausrichten einer Position eines Detektorarrays aufweist
**dadurch gekennzeichnet, dass**
das Testoriginal eine Markierung mit einer mit der linken oder rechten, mit der zu der Transportbewegung parallelen Kante bündigen Seite aufweist und dass das Verfahren die folgenden Schritte aufweist:
für jede Zeile, Beginnen der Aufzeichnung an einem ersten verfügbaren Pixel-Element des CCD oder Beenden der Aufzeichnung an einem letzten verfügbaren Pixel-Element,
und
Bewerten eines Korrekturwertes für das rechte oder linke Randsignal auf der Grundlage der Differenz zwischen dem ersten oder letzten verfügbaren Pixel-Element und der einen Seite der Markierung mit der einen Seite, die mit der rechten bzw. linken Kante bündig ist.

7. Vorrichtung mit einer Transportscannereinrichtung zum Abtasten eines zweidimensionalen Originals durch Bewegen des Originals entlang einer optischen Anordnung, die fest an der Transportscannereinrichtung montiert ist, mit einer Transportgeschwindigkeit und zum Herstellen eines elektronischen Bildes desselben zum nachfolgenden Gebrauch in einem Informationsverarbeitungssystem, wobei die Transportscannereinrichtung einen linken oder rechten Randanschlag aufweist, welche Vorrichtung eine Kalibriereinrichtung zum Kalibrieren von Geräteparametern aufweist, die den Prozess der Herstellung einer Abbildung von einem Bild auf Papier auf ein Bitmap-Bild im Speicher steuern, unter Verwendung eines rechteckigen Testoriginals, das acht Markierungen von rechteckiger dunkler Form aufweist, die paarweise in einem Abstand an jeder von vier Seiten des rechteckigen Testoriginals angeordnet sind, wobei die Markierungen eine Seite haben, die mit einer Kante des rechteckigen Testoriginals bündig ist, wobei die Kalibriereinrichtung eine Verarbeitungseinrichtung zum Verarbeiten des elektronischen Bitmap-Bildes aufweist, das durch Abtasten des rechteckigen Testoriginals erhalten wird, um aus den Markierungen in dem elektronischen Bitmap-Bild kalibrierte Geräteparameter herzuleiten,
**dadurch gekennzeichnet, dass** die Kalibriereinrichtung dazu ausgebildet ist, ein größeres Gesamt-Abtastgebiet zu verwenden als beim Abtasten eines regulären Originals, und die kalibrierten Geräteparameter aus äußeren Randpositionen der Markierungen in der elektronischen Bitmap abgeleitet werden.

## Revendications

1. Procédé d'étalonnage d'un scanner à transport, ayant une vitesse de transport et étant aménagé pour balayer un original bidimensionnel et pour former une image électronique de l'original bidimensionnel pour un usage ultérieur dans un système de manipulation d'informations, ledit balayage et ladite formation étant exécutés sous le contrôle de paramètres de périphériques, qui commandent le processus d'élaboration d'un mappage d'une image sur papier à une image en mode point en mémoire, ledit procédé comprenant les étapes consistant à :
balayer un original d'essai rectangulaire pourvu d'une image d'essai en déplaçant l'original d'essai le long d'un aménagement optique monté fixe sur le scanner à transport, l'image d'essai comprenant huit marquages d'une forme rectangulaire sombre qui sont disposés par paires à une certaine distance sur chacun des quatre côtés de l'original d'essai rectangulaire, les marquages ayant un côté qui est de niveau avec un bord de l'original d'essai rectangulaire ;
former une image en mode point électronique de l'image d'essai ;
analyser le mode point électronique pour obtenir les positions des bords externes des marquages ; et
tirer des positions des bords externes des marquages analysés des paramètres de périphériques étalonnés pour commander un autre balayage d'originaux par le scanner à transport, dans lequel, à l'étape de balayage d'un original d'essai rectangulaire, une zone de balayage totale est plus grande que pour les originaux normaux de la même taille.

2. Procédé selon la revendication 1, dans lequel la vitesse de transport du scanner à transport est ajustée pour appliquer un facteur de grossissement dans la direction de transport, **caractérisé en ce que** l'original d'essai, présentant un bord d'attaque, comprend deux côtés d'au moins un marquage en déplacement parallèle connu et parallèles au bord d'attaque, et le procédé comprend l'étape d'évaluation d'une valeur de correction pour le facteur de grossissement sur la base du déplacement parallèle réel dans l'image électronique des deux côtés.

3. Procédé selon la revendication 1, dans lequel le scanner à transport présente un CCD pour balayer l'original bidimensionnel et présente un signal de synchronisation de bord d'attaque pour lancer la lecture du CCD, **caractérisé en ce que** :
l'original d'essai comprend un marquage avec un côté qui est de niveau avec le bord d'attaque ; et **en ce que** le procédé comprend en outre l'étape consistant à :
évaluer une valeur de correction pour le signal de synchronisation de bord d'attaque sur la base de la position du premier côté dans l'image électronique en mode point en relation avec le signal de synchronisation de bord d'attaque réellement utilisé.

4. Procédé selon la revendication 1, dans lequel le scanner à transport présente un CCD pour balayer l'original bidimensionnel et présente un signal de synchronisation de bord de fuite pour arrêter la lecture du CCD, **caractérisé en ce que** :
l'original d'essai comprend un marquage avec un côté qui est de niveau avec le bord de fuite ; et **en ce que** le procédé comprend en outre l'étape consistant à :
évaluer une valeur de correction pour le signal de synchronisation de bord de fuite sur la base de la position du premier côté dans l'image électronique en mode point en relation avec le signal de synchronisation de bord d'attaque réellement utilisé.

5. Appareil selon l'une quelconque des revendications précédentes, dans lequel le scanner à transport présente un facteur de grossissement perpendiculaire à la direction de transport,
**caractérisé en ce que** :
l'original d'essai comprend deux côtés d'au moins un marquage parallèles à la direction de transport et
**en ce que** le procédé comprend en outre l'étape consistant à :
évaluer une valeur de correction pour le facteur de grossissement perpendiculaire à la direction de transport sur la base d'un rapport de la distance entre les deux côtés de l'image électronique en mode point et de la distance réelle sur l'original d'essai.

6. Procédé selon l'une quelconque des revendications précédentes, dans lequel le scanner à transport présente un arrêt de position marginale de gauche ou de droite pour aligner une position de réseau de détecteurs,
**caractérisé en ce que** :
l'original d'essai comprend un marquage avec un côté qui est de niveau avec le bord de gauche ou de droite parallèle au mouvement de transport ; et **en ce que** le procédé comprend les étapes consistant à :
pour chaque ligne, lancer l'enregistrement sur un premier élément de pixel disponible du CCD ou arrêter l'enregistrement sur un dernier élément de pixel disponible ; et évaluer une valeur de correction pour le signal marginal de gauche ou de droite sur la base de la différence entre le premier ou le dernier élément de pixel disponible et le premier côté du marquage avec un côté de niveau avec le bord de gauche ou de droite, respectivement.

7. Appareil ayant une installation de balayage à transport pour balayer un original bidimensionnel en déplaçant l'original le long d'un aménagement optique monté fixe sur l'installation de balayage à transport avec une vitesse de transport et pour former une image électronique de celui-ci pour un usage ultérieur dans un système de manipulation d'informations, l'installation de balayage à transport présentant un arrêt marginal de gauche ou de droite, ledit appareil comprenant des moyens d'étalonnage pour étalonner des paramètres de périphériques qui commandent le processus d'élaboration d'un mappage d'une image sur papier à une image en mode point en mémoire en utilisant un original d'essai rectangulaire, comprenant huit marquages d'une forme rectangulaire sombre qui sont disposés par paires à une certaine distance sur chacun des quatre côtés de l'original d'essai rectangulaire, les marquages ayant un côté de niveau avec un bord de l'original d'essai rectangulaire, dans lequel lesdits moyens d'étalonnage comprennent des moyens de traitement pour traiter l'image électronique en mode point obtenue en balayant l'original d'essai rectangulaire afin d'obtenir à partir des marquages de l'image électronique en mode point des paramètres de périphériques étalonnés, **caractérisé en ce que** les moyens d'étalonnage sont configurés pour appliquer une zone de balayage totale plus grande que pour le balayage d'un original normal et les paramètres de périphériques étalonnés sont tirés de positions de bords externes des marquages dans le mode point électronique.
